# EUROPÄISCHE PATENTSCHRIFT

(11) **EP 0 741 850 B1**
(45) Veröffentlichungstag und Bekanntmachung des Hinweises auf die Patenterteilung: **27.05.1998**
(21) Anmeldenummer: 95907593.8
(22) Anmeldetag: 24.01.1995
(51) Int. Cl.: F23R 3/28, F23R 3/34, F23R 3/12, F23R 3/22, F02K 3/10, F23R 3/04

(54) **VERFAHREN ZUR VERBRENNUNG EINES BRENNSTOFFES IN VERDICHTETER LUFT**
METHOD OF BURNING FUEL IN COMPRESSED AIR
PROCEDE DE COMBUSTION D'UN COMBUSTIBLE DANS DE L'AIR COMPRIME

(30) Priorität: 24.01.1994 EP 94100989; 24.01.1994 EP 94100988
(43) Veröffentlichungstag der Anmeldung: 13.11.1996
(73) Patentinhaber: SIEMENS AKTIENGESELLSCHAFT, 80333 München (DE)
(72) Erfinder: MAGHON, Helmut, D-45481 Mülheim/Ruhr (DE)
(86) Internationale Anmeldenummer: EP9500244
(87) Internationale Veröffentlichungsnummer: WO9520131

(56) Entgegenhaltungen:
- EP-A- 0 564 183
- FR-A- 2 149 338
- GB-A- 768 370
- GB-A- 811 892
- US-A- 3 433 015
- US-A- 3 701 255
- US-A- 5 207 064

## Beschreibung

Die Erfindung betrifft ein Verfahren zur Verbrennung eines Brennstoffes in verdichteter Luft, die in einem sich entlang einer Achse bewegenden Strom bereitgestellt wird, wobei zunächst von dem Strom mehrere Teilströme abgeteilt werden, deren jedem gesondert ein Teil des Brennstoffs zugeführt und in einer in den Strom hineinragenden Pilotflamme verbrannt wird, und wobei übriger Brennstoff in dem Strom verteilt wird, sich an den Pilotflammen entzündet und verbrannt wird.

Die Erfindung bezieht sich insbesondere auf die Verbrennung eines Brennstoffes in verdichteter Luft, die in einer Gasturbine zwischen einem Verdichterteil und einem Turbinenteil strömt. Die Erfindung kommt auch in Frage zur Verbrennung eines Brennstoffes in verdichteter Luft, die zwischen zwei Turbinenteilen einer entsprechenden Gasturbine strömt.

In einer der Bereitstellung mechanischer Energie dienenden Gasturbine wird Luft in einem Verdichterteil auf einen hohen Druck verdichtet, anschließend durch Zufuhr von Wärme, üblicherweise durch Verbrennung eines Brennstoffs, erhitzt, wobei in der Regel der hohe Druck im wesentlichen beibehalten wird, und schließlich in einem Turbinenteil entspannt. Die Verbrennung eines Brennstoffes wird herkömmlicherweise bewerkstelligt, indem das Gas durch eine Brennkammer geführt wird, in der sich der Brenner oder eine Anordnung mehrerer Brenner befindet, durch die dem Gas der zu verbrennende Brennstoff zugeführt und entzündet wird.

Beispiele für derartige Brenner sind der EP 0 193 838 B1, dem US-Patent Re. 33896, der EP 0 276 696 B1, dem US-Patent 5 062 792, der WO 92/19913 Al sowie, in anderen Ausführungsformen, der EP 0 210 462 A1, der EP 0 321 809 A1 und der EP 0 483 554 A1 entnehmbar. Ein Beispiel für eine in einer Gasturbine einzusetzende Brennkammer mit einer Vielzahl von Brennern ist der EP 0 489 193 A1 entnehmbar. Diese Brennkammer hat einen kreisförmigen Ringraum mit einer Stirnwand, in der die Brenner befestigt sind, wobei ein großer Teil der zur Verbrennung bereitgestellten verdichteten Luft durch den Brenner in den Ringraum eintritt. Der Ringraum ist weiterhin begrenzt von einer Innenwand und einer Außenwand, die jeweils Schlitze zum Durchtritt von Luft aufweisen. Die Luft, die durch diese Schlitze in den Ringraum eintritt, dient zur Kühlung der Innenwand und der Außenwand. Die Brennkammer ist zwischen einem Verdichterteil und einem Turbinenteil der Gasturbine angeordnet. Bevor der Strom der in dem Verdichterteil verdichteten Luft in die Brennkammer eintritt, wird er mehrfach umgelenkt und verliert einen Drall, dem er beim Verlassen des Verdichterteils möglicherweise hatte, spätestens beim Eintritt in die Brennkammer. Jeder Brenner prägt zwar seinerseits dem Teilstrom des Gases, welcher durch ihn hindurch tritt, einem gewissen Drall auf, was jedoch nicht dazu führt, daß der Strom des Gases einen Drall bezüglich der Achse erhält. Durch die Ausgestaltung der Brennkammer und die relativ komplizierte Führung des Stromes ergeben sich Druckverluste in erheblicher Höhe; außerdem muß, da der Strom einen Drall, der ihm in dem Verdichterteil eventuell mitgeteilt wurde, verliert, dem Strom beim Eintritt in den Turbinenteil erneut ein Drall aufgeprägt werden, was erheblichen apparativen Aufwand erfordert und weiteren Druckverlust nach sich zieht.

Ein Beispiel für eine Brennkammer, in der ein Strom verdichteter Luft mit einem Drall geführt werden soll, geht hervor aus der EP 0 590 297 A1. Dieses Dokument vermittelt zwar keine eindeutigen Hinweise, wie die Brennkammer konstruiert werden soll, weist aber darauf hin, daß aufgrund der Führung des Stroms durch die Brennkammer unter Beibehaltung des Dralls ein herkömmlicherweise am Eintritt des Turbinenteils vorzusehendes, feststehendes Leitrad entfallen kann.

Die Art und Weise, wie die Verbrennung in einem Strom verdichteter Luft vor sich geht, ist abhängig von vielen Einzelheiten, die den Strom beschreiben. Insbesondere dann, wenn der Strom sich relativ schnell bewegt, kann eine darin stattfindende Verbrennung zu Instabilitäten neigen, die sich in einer erhöhten Produktion von Schadstoffen äußern und bis zum vollständigen Ausfall der Verbrennung führen können. Eine Verbrennung innerhalb kurzer Zeit, die entsprechend in einem relativ schnell strömenden Strom erfolgen muß, ist allerdings sehr erwünscht, um eine Produktion von Stickoxiden, die sich aus den bei der Verbrennung auftretenden hohen Temperaturen von selbst einstellt, ohne daß es auf Einzelheiten der bei der Verbrennung stattfindenden Reaktion ankommt, zu unterdrücken. Für das Einsetzen dieser Produktion von Stickoxiden allein erforderlich ist ein Überschuß an Sauerstoff in dem bei der Verbrennung entstehenden Rauchgas, was allerdings in einer Gasturbine immer der Fall ist. Eine geringe Verweilzeit des Stroms bei ausgeprägt hoher Temperatur ist gleichbedeutend mit einer geringen Produktion von Stickoxid. Die soeben geschilderte Problematik bekommt unter Umständen ein noch höheres Gewicht, wenn der Strom mit einem Drall geführt wird, da dies bei vorgegebener Verweilzeit des Stroms zur Verbrennung des Brennstoffes eine noch höhere Strömungsgeschwindigkeit erfordert.

In Ansehung dieser Problematik liegt der Erfindung die Aufgabe zugrunde, ein Verfahren der eingangs genannten Art anzugeben, bei dem die Stabilität der Verbrennung des Brennstoffes stets gewährleistet ist.

Zur Lösung dieser Aufgabe wird erfindungsgemäß ein Verfahren zur Verbrennung eines Brennstoffes in verdichteter Luft, die in einem sich entlang einer Achse bewegenden Strom bereitgestellt wird, angegeben, bei dem zunächst von dem Strom mehrere Teilströme abgeteilt werden, deren jedem gesondert ein Teil des Brennstoffs zugeführt und in einer in den Strom hineinragenden Pilotflamme verbrannnt wird, und wobei übriger Brennstoff in dem Strom verteilt wird, sich an den Pilotflammen entzündet und verbrannt wird, wobei der übrige Brennstoff inhomogen in dem Strom verteilt wird, so daß eine dadurch gebildete Verteilung des Brennstoffs in dem Strom an jeder Pilotflamme ein lokales Maximum hat.

Im Sinne der Erfindung wird abgesehen von der herkömmlichen Praxis, den Strom der Luft, in der der Brennstoff verbrannt werden soll, in eine Vielzahl von Teilströmen aufzuteilen und jedem dieser Teilströme mehr oder weniger separat Wärme zuzuführen; die Hauptlast der Verbrennung erfolgt erfindungsgemäß ohne daß der Strom in Teilströme aufgeteilt ist. Ein Teil des Stromes wird allerdings abgeteilt und in Teilströme aufgeteilt, und diese Teilströme dienen zur Bildung von Pilotflammen, die in den Strom hineinragen und Zündquellen für den Rest des Brennstoffes bilden, der mehr oder weniger frei in dem Strom verteilt wird. Die Verteilung des Brennstoffes in dem Strom ist gezielt inhomogen derart, daß an jeder Pilotflamme ein lokales Maximum der Verteilung vorliegt. Die Inhomogenität der Verteilung des Brennstoffes in dem Strom stellt sicher, daß an jeder Pilotflamme ein relativ reiches Gemisch aus Brennstoff und Luft vorliegt, welches einfach und sicher zünden kann; in diesem Sinne prägt die nach herkömmlichem Verständnis unerwünschte Inhomogenität in der Verteilung des Brennstoffes zur Stabilisierung der Verbrennung und zur Sicherstellung, daß aller Brennstoff verbrannt wird, bei.

Die von dem Strom abgeteilten Teilströme werden so bemessen und mit entsprechenden Mengen an Brennstoff versetzt, daß sich eine unter allen denkbaren Umständen stabile Verbrennung ergibt; insbesondere kann für diese Verbrennung ein relativ reiches Gemisch aus Brennstoff und Luft gebildet werden. Der übrige Brennstoff wird dem Strom direkt zugeführt, wobei das entstehende Gemisch im Mittel vergleichsweise mager ist, wie es die üblichen Betriebsumstände für eine Gasturbine erfordern. Der dementsprechend vorliegende Überschuß an Luft kann sich unter Umständen nachteilig auf die Verbrennung auswirken und erfordert womöglich weitere Maßnahmen zur Stabilisierung der Verbrennung. Diese Stabilisierung erfolgt erfindungsgemäß durch die unter günstigen Umständen gebildeten Pilotflammen, die als Zündquellen wirken und sicherstellen, daß der dem Strom direkt zugeführte Brennstoff sich entzündet und vollständig verbrennt.

Der Strom der verdichteten Luft kann gegebenenfalls bezüglich der Achse einen Drall aufweisen, was insbesondere zur Anwendung in einer Gasturbine von Vorteil ist; dabei können nämlich Leiteinrichtungen, die einen im Verdichterteil eventuell aufgebauten Drall des Stroms beseitigen müssen, entfallen, und die Gasturbine kann einfacher gestaltet werden. Zusatzlich kann möglicherweise eine Leiteinrichtung am Eintrittsspalt der Gasturbine entfallen, mit der ein Drall, den die rotierenden Komponenten des Turbinenteils für ihre Funktion benötigen, erst aufgebaut werden müßte; wenn auch ein vollständiger Verzicht auf Leiteinrichtungen nicht immer möglich ist, können die Leiteinrichtungen doch einfacher gestaltet werden, da der Strom bereits einen Teil des erforderlichen Dralls aufweist und weniger als herkömmlich erforderlich umgelenkt werden muß.

Bevorzugtermaßen wird demjenigen Teil des Stromes, aus dem die Teilströme abgezweigt werden, vor Abzweigung der Teilströme der Drall entzogen, besonders bevorzugt vollständig entzogen. Der Entzug des Dralls ist verbunden mit einer Verlangsamung und einer Drucksteigerung, die zur Bildung der Pilotflamme vorteilhaft ausgenutzt werden kann. Der bei der Verlangsamung entstandene Druck ist nämlich bei entsprechender Auslegung der Führungseinrichtungen ausreichend, um die Pilotflamme zu bilden, so daß keine zusätzlichen Gebläseeinrichtungen oder der gleichen vorgesehen werden müssen.

Besonders bevorzugt ist die Anwendung des Verfahrens in einer Gasturbine, wobei der Strom aus einem Verdichterteil der Gasturbine bereitgestellt und nach der Verbrennung des Brennstoffs einem Turbinenteil der Gasturbine zugeführt wird. Mit weiterem Vorzug sind Leitschaufeln in einem Eintrittsspalt, durch den der Strom den Turbinenteil anströmt, in solcher Anzahl vorgesehen und so angeordnet, daß ein lokales Maximum der aufgrund der inhomogenen Verteilung des Brennstoffs inhomogenen Verteilung der Temperatur in dem Strom jeweils zwischen zwei Leitschaufeln liegt. Dies ist insbesondere dadurch zu erreichen, daß die Anzahl der Pilotflammen übereinstimmt mit der Anzahl der Leitschaufeln und daß die Pilotflammen und die Leitschaufeln unter Berücksichtigung eines eventuellen Dralls des Stroms in geeigneter Weise relativ zueinander positioniert sind.

Ausführungsbeispiele der Erfindung gehen aus der Zeichnung hervor. In der Zeichnung ist von der Darstellung von Einzelheiten, die für die Erläuterung unwichtig sind, abgesehen worden. Auch ist die Zeichnung nicht als maßgetreue Darstellung eines konkreten Ausführungsbeispiels anzusehen. Im einzelnen zeigen:
- FIG 1: eine Vorrichtung zur Durchführung des Verfahrens zur Verbrennung eines Brennstoffes in verdichteter Luft, in einem axialen Längsschnitt;
- FIG 2: einen Querschnitt durch dieselbe Vorrichtung, wie angedeutet durch die Linie II-II in Figur 1;
- FIG 3: einen tangentialen Schnitt durch dieselbe Vorrichtung, wie angedeutet durch die Linie III-III in Figur 2;
- FIG 4: einen Querschnitt durch die Vorrichtung nach Figur 1, wie angedeutet durch die Linie IV-IV in Figur 1;
- FIG 5: einen Querschnitt durch eine in der Vorrichtung einsetzbare Rippe zur Zustellung mehrerer verschiedener Brennstoffe;
- FIG 6: eine Anordnung mit zwei Systemen zur Zustellung von Brennstoff.

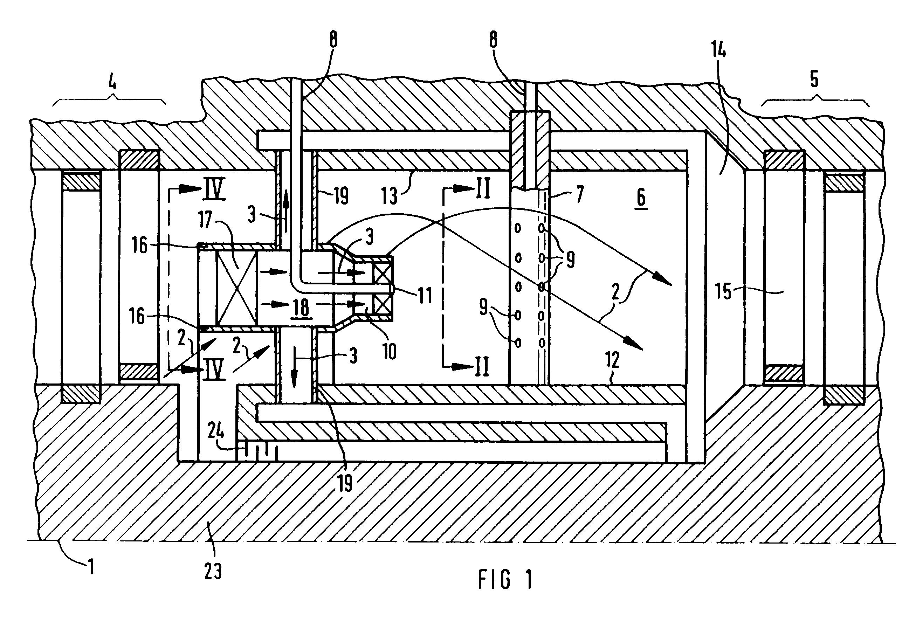

In den Figuren tragen einander entsprechende Teile gleiche Bezugszeichen; insoweit wird daher nunmehr auf die Figuren 1 bis 4 gemeinsam Bezug genommen.

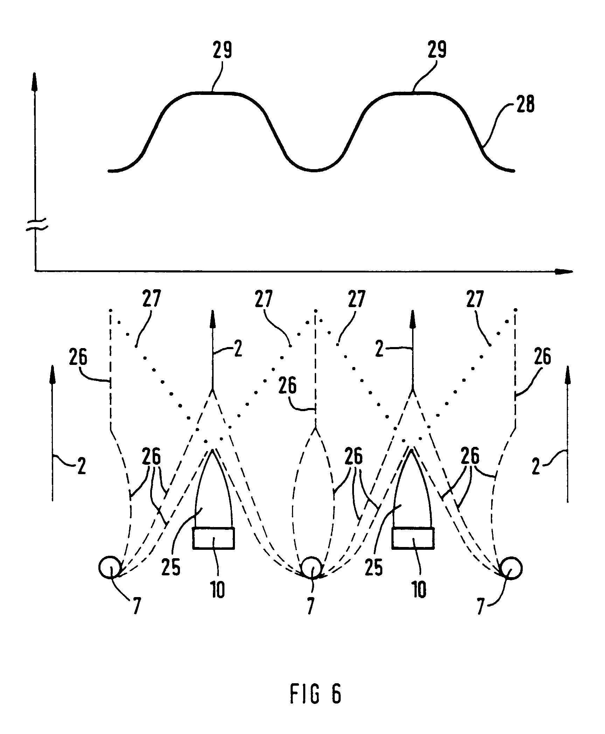

Insbesondere aus Figur 1 erkennbar ist ein Ausschnitt aus einer Gasturbine, und zwar eine zwischen einem Verdichterteil 4 und einem Turbinenteil 5 angeordnete Brennkammer mit einem einer Achse 1 der Gasturbine umringenden Ringraum 6. Aus dem Verdichterteil 4 wird ein sich entlang der Achse 1 bewegender und bezüglich dieser Achse 1 einen Drall aufweisender Strom 2 von verdichteter Luft bereitgestellt. Die Eigenschaft, daß der Strom 2 einen Drall hat, ist durch diesen symbolisierenden gebogenen Pfeile angedeutet. Der Strom 2 durchsetzt weitgehend ungehindert den Ringraum 6, welcher zur Achse 1 hin von einer Innenwand 12 und von der Achse 1 weg von einer Außenwand 13 begrenzt ist. Der Ringraum 6 umringt einen Rotor 23 der Gasturbine. Um zu verhindern, daß ein Teil des Stroms 2 entlang des Rotors 23 fließt, ist zwischen diesem und der Innenwand 12 eine Dichtungsanordnung 24, z. B. eine Labyrinthdichtung, eingefügt. Der zu verbrennende Brennstoff wird über ein Leitungssystem 8 zugeführt. Der größte Teil des Brennstoffes fließt dabei Rippen 7 zu und gelangt durch in jeder Rippe 7 vorgesehene Düsen 9 in den Strom 2, wo er entzündet und verbrannt wird. Der Brennstoff soll vollständig verbrannt sein, bevor der Strom 2 durch einen Eintrittsspalt 14 in den Turbinenteil 5 eintritt und die dortigen Leitschaufeln 15 erreicht. Um die Verbrennung des durch die Rippen 7 zugeführten Brennstoff zu bewirken und zu stabilisieren, und zusätzlich um Luft zur Kühlung der Innenwand 12 und der Außenwand 13 abzuzweigen, ragt mehr oder weniger unmittelbar hinter dem Verdichterteil 4 eine Ringleitung 16 in den Ringraum 6 hinein. Ein Teil der Luft strömt in die Ringleitung 16 hinein und verzweigt sich darin zu mehreren Teilströmen 3. Je einer dieser Teilströme 3 gelangt durch eine entsprechende Kühl leitung 19 hinter die Innenwand 12 bzw. Außenwand 13 des Ringraumes 6 und kann diese kühlen. Ein weiterer Teilstrom 3 fließt einem Pilotbrenner 10 zu. Dieser Pilotbrenner 10 hat eine Düse 11, der über das Leitungssystem 8 Brennstoff zugeführt wird, und ist vor der Rippe 7 angeordnet. Ein Teil des Brennstoffes wird dem Pilotbrenner 10 bzw. der vorgesehenen Mehrzahl von Pilotbrenner 10 zugeführt und verbrennt hauptsächlich mit derjenigen Luft, die über den Teilstrom 3 zugeführt wird. Dabei ist es möglich, das Mischungsverhältnis von Brennstoff und Luft feinfühlig einzustellen, insbesondere auf einen Wert, der eine konstante und stabile Verbrennung gewährleistet. Diese Verbrennung stabilisiert die Verbrennung des Brennstoffes, der durch die Rippe 7 zugeführt wird. Es versteht sich, daß der Pilotbrenner 10 und die Rippe 7 je nach Ausführung tangential gegeneinander versetzt sind; in soweit ist die aus Figur 1 ersichtliche Anordnung nicht repräsentativ. Der in die Ringleitung 16 eingetretene Teil des Stromes 2 gelangt zunächst an Umlenkschaufeln 17 und wird dort so umgelenkt, daß der ursprünglich vorhandene Drall verlorengeht. Diese Umlenkung ist verbunden mit einer gewissen Abbremsung und einer sich daraus ergebenden Steigerung des statischen Drucks und trägt somit zur Stabilisierung der Teilströme 3 in erheblichem Umfang bei. Der durch die Umlenkschaufeln 17 umgelenkte Anteil des Stromes 2 gelangt in einen Sammelraum 18, von wo die Teilströme 3 abzweigen. Die Anordnung der Rippe 7 hinter dem Pilotbrenner 10 ist nicht zwingend; die Positionen der Rippe 7 und des Pilotbrenners 10 entlang der Achse 1 sind entsprechend den Strömungsverhältnissen zu wählen. Es ist durchaus denkbar, daß der Pilotbrenner 10 und die Rippe 7 nebeneinander zu liegen kommen; dann können eventuell die Rippen 7 die Kühlleitungen 19 teilweise ersetzen. Siehe auch Figur 6.

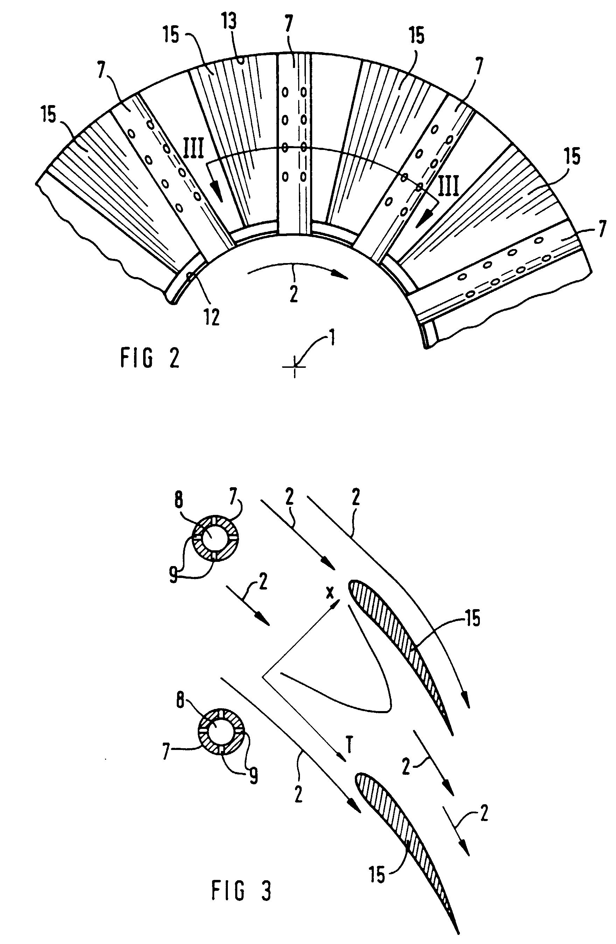

Figur 2 zeigt, in welcher räumlichen Beziehung die Rippen 7 des Ringraums und die Leitschaufeln 15 im Turbinenteil 5 zueinander angeordnet sind, in einer Querschnittsansicht senkrecht zur Achse 1, die in der Figur als Kreuz erscheint. Ein gebogener Pfeil veranschaulicht den Drall des Stroms 2. Man erkennt, daß gleich viele Leitschaufeln 15 wie Rippen 7 vorliegen, und man erkennt auch, daß die Rippen 7 und die Leitschaufeln 15 in bestimmter Weise azimutal gegeneinander versetzt sind. Wird diese Versetzung entsprechend dem Drall des Stromes 2 richtig gewählt, so kommt ein Maximum in der Verteilung der Temperatur in dem Strom 2, welches sich an einer Stelle ergibt, an der sich aufgrund der inhomogenen Verteilung des Brennstoffes ein lokales Maximum der Verteilung des Brennstoffes ergeben hat, genau zwischen zwei Leitschaufeln 15 zu liegen und kann damit zu einer thermischen Entlastung der Leitschaufeln 15 beitragen.

Wie eine derartige thermische Entlastung der Leitschaufeln 15 bewerkstelligt werden kann, geht aus Figur 3 hervor. Dort ist ein Tangentialschnitt durch die in Figur 2 im Querschnitt dargestellte Anordnung, entsprechend der Linie III-III in Figur 2, dargestellt. Man erkennt, wie der Strom 2 von den Rippen 7 zu den Leitschaufeln 15 fließt. In Figur 3 eingetragen ist auch eine Skizze der Verteilung der Temperatur in dem Strom 2, wenn er von den Rippen 7 abgeströmt und die Verbrennung beendet ist. Die Temperatur T ist aufgetragen in Abhängigkeit von einer Koordinate x, welche senkrecht zu dem Strom 2 zu messen ist. Man erkennt, daß ein lokales Maximum der Temperatur T zwischen den Leitschaufeln 15 liegt, wobei die Temperatur des Stromes 2 in der Nähe der Leitschaufel 15 gegenüber ihrem Maximum deutlich reduziert ist. Thermodynamisch bedeutsam für den in der Gasturbine ablaufenden Prozeß ist der Mittelwert der Temperatur, gemittelt über den gesamten Strom; durch die inhomogene Temperaturverteilung aufgrund der Geometrie der Anordnung der Rippen 7 kann erreicht werden, daß die Leitschaufeln 15 nicht mit dem Mittelwert der Temperatur oder einer sogar darüberliegenden Temperatur beaufschlagt werden, sondern mit einer gegenüber dem Mittelwert deutlich verringerten Temperatur. In Anbetracht dessen, daß unter anderem die thermische Belastbarkeit der verfügbaren Werkstoffe des Maximum der Temperatur beim Eintritt in einen Turbinenteil 5 bestimmen, kann unter Ausnutzung der Vorteile der Erfindung eine deutliche Steigerung dieses Maximums erreicht werden.

Aus Figur 3 erkennbar ist auch der Aufbau der Rippen 7. Die Rippen 7 sind hohl, wobei der Innenraum 8 zum Leitungssystem für den Brennstoff gehört, und weisen eine Vielzahl von Düsen 9 auf, durch welche der Brennstoff dem Strom 2 zugeführt wird. Die Düsen 9 können weitgehend beliebig über die Rippen 7 verteilt sein; es ist nicht erforderlich, Düsen 9 nur an den abströmseitigen Enden der Rippen vorzusehen. Das einzige wesentliche Kriterium für die Anordnung der Düsen 9 ist, daß die im Sinne der Erfindung gewünschte Inhomogenität der Verteilung des Brennstoffs in dem Strom 2 erzielt wird.

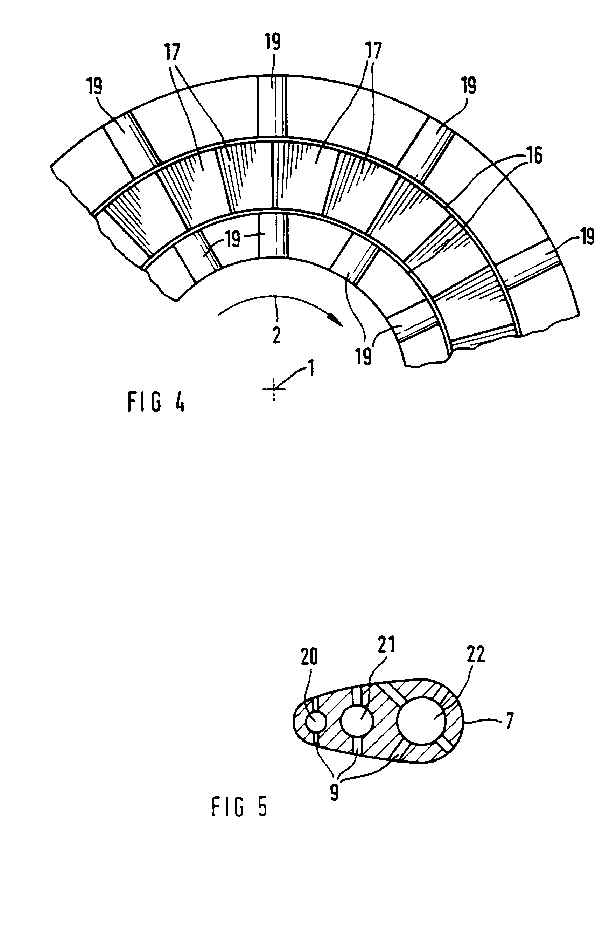

Figur 4 zeigt die Anordnung der Ringleitung 16 zur Abzweigung der Teilströme 3 mit den Kühlleitungen 19. Erkennbar sind auch die Umlenkschaufeln 17, welche den in die Ringleitung 16 eingetretenen Teil des Stroms 2 in axiale Richtung umlenken und im gewissen Maße verzögern, um eine Steigerung des statischen Drucks in den Teilströmen 3 zu erreichen.

Figur 5 zeigt einen Querschnitt durch eine Rippe 7, welche ertüchtigt ist zur wahlweisen Zustellung mehrerer Arten von Brennstoff. Im Inneren der Rippe 7 befinden sich drei Brennstoffkanäle 20, 21 und 22, wobei der kleinste Brennstoffkanal 20 der Zustellung von Öl, der mittlere Brennstoffkanal der Zustellung von Erdgas und der größte Brennstoffkanal der Zustellung eines Brenngases mit niedrigem Heizwert, beispielsweise Kohlegas, dient. Jeder Brennstoffkanal 20, 21, 22 mündet in zugehörige Düsen 9.

Figur 6 zeigt das Zusammenwirken der beiden Systeme, die im Sinne der Erfindung dem Strom 2 Brennstoff zuführen. Im unteren Teil der Figur sind die Strömungsverhältnisse in einer Brennkammer skizziert, wobei Rippen 7 und Pilotbrenner 10 von dem Strom 2 umströmt werden. Gemäß der Darstellung strömt der Strom 2 gerade. Die Figur gilt allerdings auch für einen Strom 2, der mit einem Drall strömt, wobei dann allerdings die Ordinate anders als bei einem ohne Drall strömenden Strom 2 nicht parallel zur Achse 1, sondern entlang dem Strom und dementsprechend schraubenförmig um die Achse 1 herum zu legen ist. Die Abszisse in der Figur ist in jedem Fall ein Azimutalwinkel, der um die Achse 1 herum zu messen ist. Jedem Pilotbrenner 10 wird ein (nicht dargestellter) von dem Strom 2 abgeteilter Teilstrom von Luft zugeführt, mit gleichfalls zugeführtem Brennstoff versetzt und unter Bildung einer in den Strom 2 hineinragenden Pilotflamme 25 verbrannt. Die Pilotbrenner 10 bilden somit eine erste Stufe zur Zuführung von Wärme zu dem Strom 2. Eine zweite Stufe zur Zuführung von Wärme ist gegeben durch die Rippen 7, aus denen dem Strom 2 unmittelbar Brennstoff zugeführt wird. Dabei entströmt jeder Rippe 7 Brennstoff in Richtungen etwa senkrecht zum Strom 2 und verteilt sich entlang der gestrichelt dargestellten Stromlinien 26. Bedingt durch die Anordnung der Rippen 7 ist die Verteilung des Brennstoffes in dem Strom 2 inhomogen, und dies ist im Diagramm im oberen Teil der Figur eingetragen. Jeweils zwei Brennstoffströme aus einander benachbarten Rippen 7 laufen allmählich zusammen und bilden jeweils ein lokales Maximum einer Verteilung des Brennstoffes, an dem der Brennstoff auch an jeweils einer Pilotflamme 25 entzündet wird. Entlang gepunktet eingetragener Flammfronten 27 breitet sich die Verbrennung in dem Strom 2 aus und bewirkt schließlich die vollständige Verbrennung des durch die Rippen 7 zugestellten Brennstoffes. Im Diagramm im oberen Teil der Figur ist die Verteilung 28 des Brennstoffes eingetragen; auf der Abszisse aufgetragen ist ein Azimutalwinkel, auf der Ordinate aufgetragen ist eine Konzentration. Die Ordinate ist als gebrochene Linie dargestellt, um zu symbolisieren, daß die Darstellung nur die Form der Verteilung 28 zeigt und nicht als quantitative Aussage gedacht ist. Die Verteilung 28 entspricht etwa der Verteilung des Brennstoffes auf einer Linie, die die Spitzen der Pilotflammen miteinander verbindet. Die Verteilung 28 steht in enger Beziehung zur Verteilung der Temperatur in dem Strom, die anhand von Figur 3 bereits erläutert wurde; je höher die lokale Konzentration an Brennstoff, desto hoher ist auch die bei der Verbrennung erreichte Temperatur. Auf eine vorteilhafte Weiterbildung der Erfindung sei anhand der Figur 6 noch verwiesen: Diese Weiterbildung besteht darin, sowohl Leitschaufeln 15 (vergleiche Figur 3) als auch Rippen 7 und Pilotbrenner 10 in jeweils gleicher Anzahl vorzusehen.

Erfindungsgemäß wird ein Verfahren zur Verbrennung eines Brennstoffes in verdichteter Luft angegeben, welches insbesondere zur Anwendung in einer Gasturbine geeignet ist und welches eine schnelle und vollständige Verbrennung des Brennstoffes gewährleistet.

## Patentansprüche

1. Verfahren zur Verbrennung eines Brennstoffes in verdichteter Luft, die in einem sich entlang einer Achse(1) bewegenden Strom (2) bereitgestellt wird, bei dem zunächst von dem Strom (2) mehrere Teilströme (3) abgeteilt werden, deren jedem gesondert ein Teil des Brennstoffs zugeführt und in einer in den Strom (2) hineinragenden Pilotflamme (25) verbrannt wird, und bei dem übriger Brennstoff in dem Strom (2) verteilt wird, sich an den Pilotflammen (25) entzündet und verbrannt wird, dadurch gekennzeichnet, daß der übrige Brennstoff inhomogen in dem Strom (2) verteilt wird, wobei eine dadurch gebildete Verteilung (28) des Brennstoffs in dem Strom (2) an jeder Pilotflamme (25) ein lokales Maximum (29) hat.

2. Verfahren nach Anspruch 1, bei dem der Strom (2) bezüglich der Achse (1) einen Drall aufweist.

3. Verfahren nach Anspruch 2, bei dem einem Teil des Stromes (2), aus dem die Teilströme (3) abgezweigt werden, vor der Abzweigung der Teilströme (3) der Drall entzogen wird.

4. Verfahren nach einem der vorhergehenden Ansprüche, bei dem der Strom (2) aus einem Verdichterteil (4) einer Gasturbine bereitgestellt und nach der Verbrennung des Brennstoffs einem Turbinenteil (5) der Gasturbine zugeführt wird.

5. Verfahren nach Anspruch 4, bei dem der Strom (2) den Turbinenteil (5) durch einen Eintrittsspalt (14) anströmt, in welchem Leitschaufeln (15) angeordnet sind, und wobei durch die Verbrennung des Brennstoffs in dem Strom (2) eine inhomogene Verteilung der Temperatur entstanden ist, welche lokale Maxima aufweist, deren jedes zwischen zwei Leitschaufeln (15) liegt.

## Claims

1. Method of burning a fuel in compressed air which is provided in a flow (2) moving along an axis (1), in which first of all a plurality of partial flows (3) are separated from the flow (2), to each of which partial flows (3) a portion of the fuel is separately supplied and is burnt in a pilot flame (25) projecting into the flow (2), and in which remaining fuel is distributed in the flow (2), ignites at the pilot flames (25) and is burnt, characterized in that the remaining fuel is distributed inhomogeneously in the flow (2), in the course of which a distribution (28) formed thereby of the fuel in the flow (2) has a local maximum (29) at each pilot flame (25).

2. Method according to Claim 1, in which the flow (2) has a swirl relative to the axis (1).

3. Method according to Claim 2, in which a portion of the flow (2) from which the partial flows (3) are diverted has the swirl removed from it before the diverting of the partial flows (3).

4. Method according to one of the preceding claims, in which the flow (2) is provided from a compressor part (4) of a gas turbine and is supplied to a turbine part (5) of the gas turbine after the combustion of the fuel.

5. Method according to Claim 4, in which the flow (2) passes to the turbine part (5) through an entry gap (14) in which guide blades (15) are arranged, and in which an inhomogeneous distribution of the temperature has developed due to the combustion of the fuel in the flow (2), which inhomogeneous distribution of the temperature has local maxima, each of which lies between two guide blades (15).

## Revendications

1. Procédé de combustion d'un combustible dans de l'air comprimé. qui est amené selon un courant (2), qui se déplace le long d'un axe (1), dans lequel il se détache d'abord du courant (2) plusieurs courants partiels (3), à chacun desquels est amenée séparément une partie du combustible, qui est brûlé dans une flamme de veilleuse (25) pénétrant dans le courant (2), le reste du combustible étant réparti dans le courant (2), s'enflammant au niveau des veilleuses (25) et y étant brûlé, caractérisé en ce que le reste du combustible est réparti d'une manière non-homogène dans le courant (2), une répartition (28), ainsi formée, du combustible dans le courant (2), ayant un maximum local (29) à chaque flamme de veilleuse (25).

2. Procédé selon la revendication 1, dans lequel le courant (2) présente une turbulence par rapport à l'axe (1).

3. Procédé selon la revendication 2, caractérisé en ce que la turbulence est extraite d'une partie du courant (2) dont sont détachés les courants partiels (3), en amont du point de ramification des courants partiels (3).

4. Procédé selon l'une des revendications précédentes, dans lequel le courant (2) provient d'une partie compresseur (4) d'une turbine à gaz et, après combustion du combustible, est envoyé à une partie turbine (5) de la turbine à gaz.

5. Procédé selon la revendication 4, dans lequel le courant (2) arrive dans la partie turbine (5) en passant par une fente d'entrée (14) dans laquelle sont disposées des aubes directrices (15), et où, sous l'effet de la combustion du combustible dans le courant (2), il se crée un défaut d'homogénéité de la répartition de la température, qui présente des maxima locaux, dont chacun se trouve entre deux aubes directrices (15).
